# EUROPÄISCHE PATENTANMELDUNG

(11) **EP 4 212 472 A1**
(43) Veröffentlichungstag der Anmeldung: **19.07.2023**
(21) Anmeldenummer: 22213810.9
(22) Anmeldetag: 15.12.2022
(51) Int. Cl.: B66F 9/075, G06V 10/82, G06V 20/52

(54) **VORRICHTUNG UND VERFAHREN ZUM BESTIMMEN EINER POSE EINES LADUNGSTRÄGERS**

(30) Priorität: 12.01.2022 DE 102022100632
(71) Anmelder: STILL GmbH, 22113 Hamburg (DE)
(72) Erfinder: RASHED, Mohammad, 12833-8341 Riyadh (SA); BAKR, Mohamed, 21073 Hamburg (DE)
(74) Vertreter: Patentship Patentanwaltgesellschaft

(57) **Zusammenfassung**

Die Erfindung betrifft eine Vorrichtung (110) sowie ein Verfahren zum Bestimmen einer Position und einer Orientierung eines Ladungsträgers 150, insbesondere einer Palette oder Gitterbox. Die Vorrichtung (110) umfasst eine Bilderfassungseinrichtung (130) zum Erfassen eines Bildes des Ladungsträgers (150) und einen Prozessor (120), welcher ausgebildet ist, auf der Grundlage des Bildes des Ladungsträgers (150) eine Abschätzung der Position und der Orientierung des Ladungsträgers (150) zu bestimmen, wobei die Abschätzung der Position des Ladungsträgers (150) in dem Bild des Ladungsträgers (150) zumindest teilweise innerhalb eines Begrenzungsrahmens liegt, der auf dem Ladungsträger (150) zentriert ist. Der Prozessor (120) ist ferner ausgebildet, ein neuronales Netz zu implementieren, wobei das neuronale Netz ausgebildet ist, auf der Grundlage des Bildes des Ladungsträgers (150) und der Abschätzung der Position des Ladungsträgers (150) die Position und Orientierung, d.h. die Pose des Ladungsträgers (150) zu bestimmen.

## Beschreibung

Die Erfindung betrifft eine Vorrichtung und ein Verfahren zum Bestimmen einer Pose, d.h. einer Position und einer Orientierung eines Ladungsträgers, insbesondere einer Palette oder einer Gitterbox im Raum. Ferner betriff die Erfindung ein Flurförderzeug oder einen Industrieroboter mit einer solchen Vorrichtung.

Für den Transport und die Lagerung von Produkten, Waren und Materialien werden oftmals Ladungsträger mit standardisierten Abmessungen, beispielsweise Gitterboxen oder Paletten, insbesondere Europaletten verwendet. Zur Handhabung derartiger Ladungsträger z.B. in der Intralogistik, d.h. dem innerbetrieblichen Materialfluss, z.B. in einem Warenlager, werden häufig teilweise automatisierten Flurförderzeuge, z.B. Gabelstapler, Industrieroboter und dergleichen eingesetzt. Hierzu weisen Flurförderzeuge in der Regel ein Lastaufnahmemittel, beispielsweise zwei Lastgabeln auf, die in entsprechende Einschuböffnungen des Ladungsträgers eingeschoben werden können, um diesen aufzunehmen. Wenn dies mit automatisierten Flurförderzeugen erfolgen soll, muss das Flurförderzeug den Ladungsträger, dessen Pose und die Einschuböffnungen des Ladungsträgers erkennen, um das Lastaufnahmemittel entsprechend in die Einschuböffnungen des Ladungsträgers einschieben zu können.

Der vorliegenden Erfindung liegt die Aufgabe zugrunde, eine Vorrichtung und ein Verfahren zum Bestimmen einer Pose, d.h. einer Position und einer Orientierung eines Ladungsträgers, insbesondere einer Palette oder einer Gitterbox, bereitzustellen.

Diese Aufgabe wird gemäß einem ersten Aspekt der Erfindung dadurch gelöst, dass die Vorrichtung zum Bestimmen einer Position und einer Orientierung eines Ladungsträgers mit standardisierten Abmessungen eine Bilderfassungseinrichtung, insbesondere eine 2D-Kamera, zum Erfassen eines Bildes des Ladungsträgers sowie wenigstens einen Prozessor umfasst, welcher ausgebildet ist, auf der Grundlage des Bildes des Ladungsträgers eine erste Abschätzung der Position und der Orientierung des Ladungsträgers (im Englischen auch als "initial pose estimate" bezeichnet) zu bestimmen, wobei die erste Abschätzung der Position des Ladungsträgers in dem Bild des Ladungsträgers zumindest teilweise innerhalb eines Begrenzungsrahmens (auch als "Rechteck-Label" oder "Bounding-Box" bezeichnet) liegt, der auf dem Ladungsträger zentriert ist. Der Prozessor ist ferner ausgebildet, ein künstliches neuronales Netz zu implementieren, wobei das künstliche neuronale Netz ausgebildet ist, auf der Grundlage des Bildes des Ladungsträgers und der ersten Abschätzung der Position des Ladungsträgers die Position und Orientierung, d.h. die Pose des Ladungsträgers zu bestimmen.

Unter Ladungsträgern können vorzugsweise Hilfsmittel verstanden werden, die dazu dienen eine Ladung, insbesondere umfassend eine oder mehrere Packungen, insbesondere Verpackungseinheiten, zu einer Ladungseinheit zusammenzufassen. Beispielsweise kann ein Karton, eine Kiste, eine Palette, eine Gitterbox, ein Container, eine austauschbare Wechselbrücke, ein Regalelement oder dergleichen ein Ladungsträger sein.

In einer weiteren Ausführungsform ist der Prozessor ferner ausgebildet, ein weiteres künstliches neuronales Netz zu implementieren, wobei das weitere neuronale Netz ausgebildet ist, auf der Grundlage des Bildes des Ladungsträgers die erste Abschätzung der Position und der Orientierung des Ladungsträgers zu bestimmen.

Gemäß einer Ausführungsform umfasst die Abschätzung der Position und der Orientierung des Ladungsträgers ein Bild eines CAD-Modells des Ladungsträgers.

In einer weiteren Ausführungsform kann das neuronale Netz ein Feature-Extraction-Layer umfassen, welches ausgebildet ist, auf der Grundlage des Bildes des Ladungsträgers und der Abschätzung der Position und der Orientierung des Ladungsträgers eine Feature-Map zu erstellen.

Gemäß einer Ausführungsform kann das neuronale Netz ferner ein Global-Average-Pooling-Layer umfassen, welches ausgebildet ist, die Feature-Map zu reduzieren.

In einer weiteren Ausführungsform kann das neuronale Netz ferner ein erstes Fully-Connected-Layer und ein zweites Fully-Connected-Layer umfassen, wobei das erste Fully-Connected-Layer ausgebildet ist, auf der Grundlage der reduzierten Feature-Map die Position des Ladungsträgers zu bestimmen, und wobei das zweite Fully-Connected-Layer ausgebildet ist, auf der Grundlage der reduzierten Feature-Map die Orientierung des Ladungsträgers zu bestimmen.

Gemäß einer weiteren Ausführungsform ist der Prozessor ferner ausgebildet, das neuronale Netz mit einer Vielzahl von simulierten Bildern und/oder Domain-adaptierten simulierten Bildern eines Ladungsträgers zu trainieren.

In einer weiteren Ausführungsform ist der Prozessor ausgebildet, die Vielzahl von simulierten Bildern und/oder Domain-adaptierten simulierten Bildern des Ladungsträgers zu erzeugen, indem in einem jeweiligen Bild des Ladungsträgers die Position und/oder die Orientierung des Ladungsträgers zufällig geändert wird.

Gemäß einer weiteren Ausführungsform ist der Prozessor ausgebildet, in dem jeweiligen Bild des Ladungsträgers die Position und/oder die Orientierung des Ladungsträgers auf der Grundlage einer Normalverteilung zufällig zu ändern.

In einer weiteren Ausführungsform umfasst das neuronale Netz ein erstes neuronales Subnetzwerk und ein zweites neuronales Subnetzwerk, wobei das erste neuronale Subnetzwerk ausgebildet ist, auf der Grundlage des Bildes des Ladungsträgers und der ersten Abschätzung der Position des Ladungsträgers eine Grobposition und eine Groborientierung des Ladungsträgers (d.h. eine Position und einer Orientierung des Ladungsträgers mit einer groben Auflösung) zu bestimmen, und wobei das zweite neuronale Subnetzwerk ausgebildet ist, auf der Grundlage des Bildes des Ladungsträgers und der Grobposition und der Groborientierung des Ladungsträgers die Position und Orientierung des Ladungsträgers mit einer feineren Auflösung zu bestimmen.

Gemäß einem zweiten Aspekt der Erfindung wird ein Flurförderzeug oder Industrieroboter zum Befördern eines Ladungsträgers bereitgestellt, wobei das Flurförderzeug oder der Industrieroboter eine Vorrichtung gemäß dem ersten Aspekt der Erfindung zum Bestimmen einer Position und einer Orientierung eines Ladungsträgers mit standardisierten Abmessungen umfasst. Bei dem Flurförderzeug kann es sich insbesondere um ein autonomes Flurförderzeug handeln, beispielsweise ein für den fahrerlosen und/oder autonom agierenden Betrieb ausgebildetes Flurförderzeug. Bei dem Industrieroboter kann es sich insbesondere um einen Kommissionierroboter handeln.

Gemäß einem dritten Aspekt der Erfindung wird ein Verfahren zum Bestimmen einer Position und einer Orientierung eines Ladungsträgers, insbesondere einer Palette oder Gitterbox mit standardisierten Abmessungen, bereitgestellt, wobei das Verfahren die folgenden Schritte umfasst:
Erfassen eines Bildes des Ladungsträgers;
Bestimmen einer ersten Abschätzung der Position und der Orientierung des Ladungsträgers auf der Grundlage des Bildes des Ladungsträgers, wobei die erste Abschätzung der Position des Ladungsträgers in dem Bild des Ladungsträgers zumindest teilweise innerhalb eines Begrenzungsrahmens liegt, der auf dem Ladungsträger zentriert ist; und
Bestimmen mittels eines künstlichen neuronalen Netzes der Position und der Orientierung des Ladungsträgers auf der Grundlage des Bildes des Ladungsträgers und der Abschätzung der Position des Ladungsträgers.

Das Verfahren gemäß dem dritten Aspekt der Erfindung kann mittels der Vorrichtung gemäß dem ersten Aspekt der Erfindung durchgeführt werden. Daher ergeben sich weitere möglichen Ausführungsformen des Verfahrens gemäß dem dritten Aspekt der Erfindung aus den vorstehend und nachstehend beschriebenen weiteren Ausführungformen der Vorrichtung gemäß dem ersten Aspekt der Erfindung.

Weitere Vorteile und Einzelheiten der Erfindung werden beispielhaft anhand der in den schematischen Figuren dargestellten Ausführungsbeispielen näher erläutert. Hierbei zeigt
- Figur 1: eine schematische Darstellung einer Vorrichtung zum Bestimmen der Pose eines Ladungsträgers gemäß einer Ausführungsform, die Teil eines Flurförderzeugs oder Industrieroboters ist;
- Figur 2: eine schematische Darstellung, welche eine Abschätzung der Pose eines Ladungsträgers gemäß einer Ausführungsform illustriert;
- Figur 3: eine schematische Darstellung, welche die Erstellung von Bildern zum Trainieren eines neuronalen Netzes einer Vorrichtung zum Bestimmen der Pose eines Ladungsträgers gemäß einer Ausführungsform illustriert;
- Figur 4: eine schematische Darstellung, welche das Bestimmen der Pose eines Ladungsträgers mit einem neuronalen Netz gemäß einer Ausführungsform illustriert;
- Figur 5: eine schematische Darstellung, welche das Trainieren eines neuronalen Netzes einer Vorrichtung zum Bestimmen der Pose eines Ladungsträgers gemäß einer Ausführungsform illustriert;
- Figur 6a: eine schematische Darstellung, welche das Trainieren eines neuronalen Netzes zur Erstellung einer Vielzahl von Bildern zum Trainieren eines neuronalen Netzes der Vorrichtung zum Bestimmen der Pose eines Ladungsträgers gemäß einer Ausführungsform illustriert;
- Figur 6b: eine schematische Darstellung, welche das Anwenden des neuronalen Netzes von Figur 6a zur Erstellung einer Vielzahl von Bildern zum Trainieren eines neuronalen Netzes der Vorrichtung zum Bestimmen der Pose eines Ladungsträgers gemäß einer Ausführungsform illustriert;
- Figur 7: eine schematische Darstellung, welche die Architektur eines neuronalen Netzes einer Vorrichtung zum Bestimmen der Pose eines Ladungsträgers gemäß einer Ausführungsform illustriert;
- Figur 8: ein Flussdiagramm, welches Schritte eines Verfahrens zum Bestimmen einer Pose eines Ladungsträgers gemäß einer Ausführungsform illustriert; und
- Figur 9: mehrere Graphen, welche die Genauigkeit der Bestimmung der Pose eines Ladungsträgers durch die Vorrichtung gemäß mehrerer Ausführungsformen illustriert.

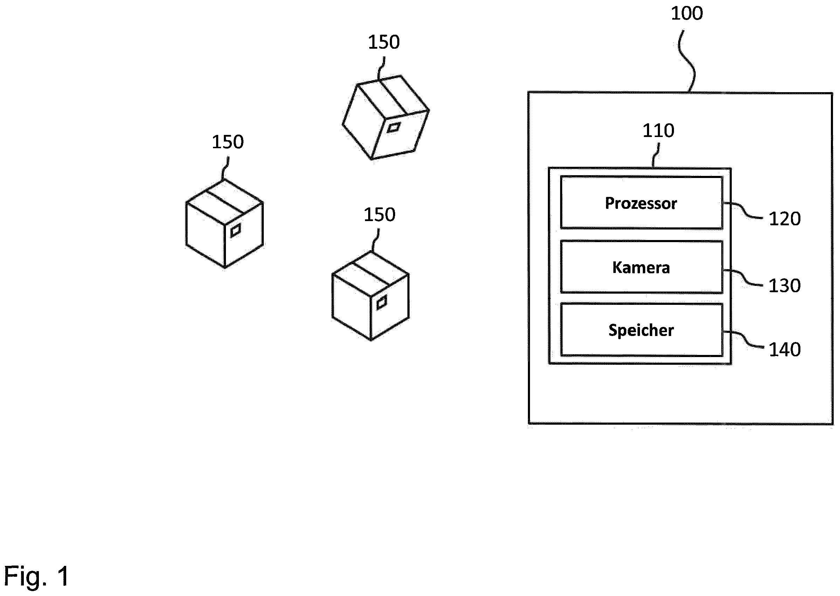

Figur 1 zeigt eine schematische Darstellung einer Vorrichtung 110 zum Bestimmen der Pose, d.h. der Position und der Orientierung eines Ladungsträgers 150 mit standardisierten Abmessungen gemäß einer Ausführungsform. Unter Ladungsträger können Hilfsmittel verstanden werden, die dazu dienen, eine Ladung, insbesondere umfassend eine oder mehrere Packungen, insbesondere Verpackungseinheiten, zu einer Ladungseinheit zusammenzufassen. Beispielsweise kann ein Karton, eine Kiste, eine Palette, eine Gitterbox, ein Container, eine austauschbare Wechselbrücke, ein Regalelement oder dergleichen ein Ladungsträger 150 sein. Wie in Figur 1 dargestellt, kann die Vorrichtung 110 Teil eines Flurförderzeugs 100 oder Industrieroboters 100 sein. Bei dem Flurförderzeug 100 kann es sich insbesondere um ein autonomes Flurförderzeug 100 handeln, beispielsweise ein für den fahrerlosen und/oder autonom agierenden Betrieb ausgebildetes Flurförderzeug 100. Bei dem Industrieroboter 100 kann es sich insbesondere um einen Kommissionierroboter 100 handeln.

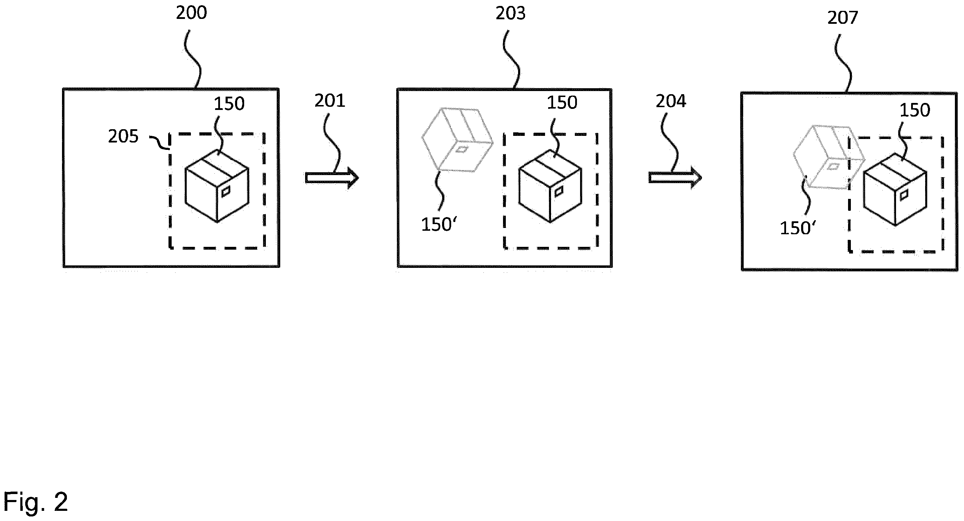

Die Vorrichtung 110 umfasst eine Bilderfassungseinrichtung 130, insbesondere eine 2D-Kamera 130, zum Erfassen eines Bildes 200 des Ladungsträgers 150 (ein beispielhaftes Bild 200 ist in Figur 2 dargestellt) sowie wenigstens einen Prozessor 120, welcher ausgebildet ist, auf der Grundlage des Bildes 200 des Ladungsträgers 150 eine erste Abschätzung der Position und der Orientierung des Ladungsträgers (im Englischen auch als "initial pose estimate" bezeichnet) zu bestimmen. Gemäß einer Ausführungsform umfasst die Abschätzung der Position und der Orientierung des Ladungsträgers 150 ein Bild eines CAD-Modells 150' des Ladungsträgers 150.

In einer Ausführungsform kann die Vorrichtung 110 ferner einen nichtflüchtigen Speicher 140 umfassen. Der nichtflüchtige Speicher 140 kann ausgebildet sein, Daten und ausführbaren Programmcode zu speichern, der, wenn von dem Prozessor 120 der Vorrichtung 110 ausgeführt, den Prozessor 120 veranlasst, die im Folgenden beschriebenen Funktionen, Operationen und Verfahren durchzuführen.

Wie dies in Figur 2 dargestellt ist, liegt die erste Abschätzung der Position des Ladungsträgers 150 (d.h. des CAD-Modells 150' des Ladungsträgers 150) in dem Bild des Ladungsträgers 150 innerhalb eines Begrenzungsrahmens 205 (auch als "Rechteck-Label" oder "Bounding-Box" bekannt), der auf dem Ladungsträger 150 zentriert ist. Beispielsweise würde der Prozessor 120 die in Bild 203 dargestellte exemplarische erste Abschätzung der Position des Ladungsträgers 150 (d.h. des CAD-Modells 150' des Ladungsträgers 150) verwerfen, da das CAD-Modell 150' des Ladungsträgers 150 nicht innerhalb des Begrenzungsrahmens 205 liegt. Hingegen würde der Prozessor 120 die in Bild 207 dargestellte exemplarische erste Abschätzung der Position des Ladungsträgers 150 (d.h. des CAD-Modells 150' des Ladungsträgers 150) akzeptieren, da das CAD-Modell 150' des Ladungsträgers 150 innerhalb des Begrenzungsrahmens 205 liegt. Dabei muss, wie in Figur 2 dargestellt, nicht das Bild des gesamten CAD-Modell 150' des Ladungsträgers 150 innerhalb des Begrenzungsrahmens 205 liegen, sondern es reicht, wenn ein Teil davon innerhalb des Begrenzungsrahmens 205 liegt.

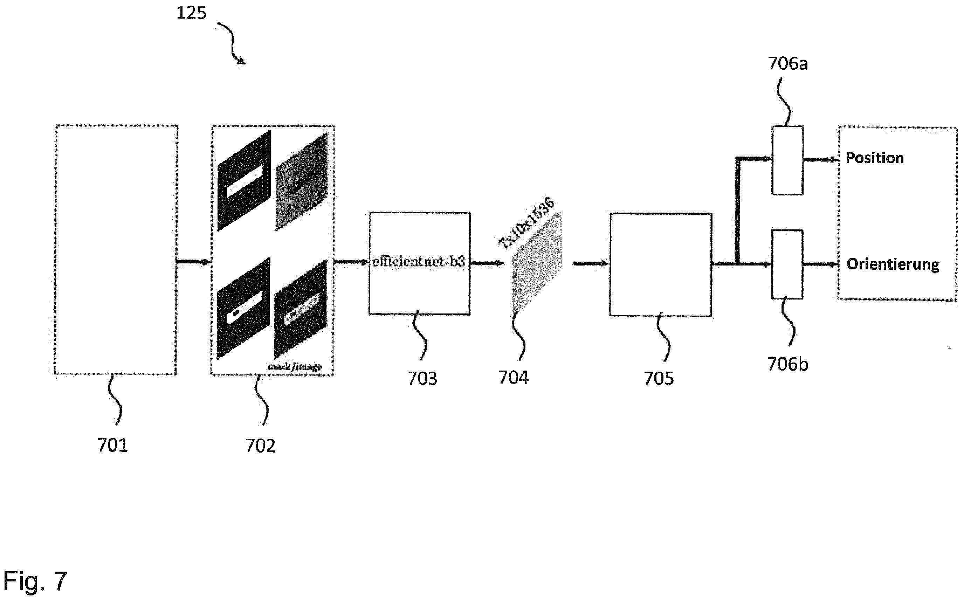

Wie dies nachstehend detaillierter beschrieben wird, ist der Prozessor 120 ferner ausgebildet, ein künstliches neuronales Netz 125 zu implementieren. Eine bevorzugte Architektur des neuronalen Netzes 125 ist in Figur 7 dargestellt. Dabei ist das künstliche neuronale Netz 125 ausgebildet, auf der Grundlage des Bildes 200 des Ladungsträgers 150 und der ersten Abschätzung der Position des Ladungsträgers 150 (d.h. des CAD-Modells 150' des Ladungsträgers 150) die Position und Orientierung, d.h. die Pose des Ladungsträgers 150 zu bestimmen.

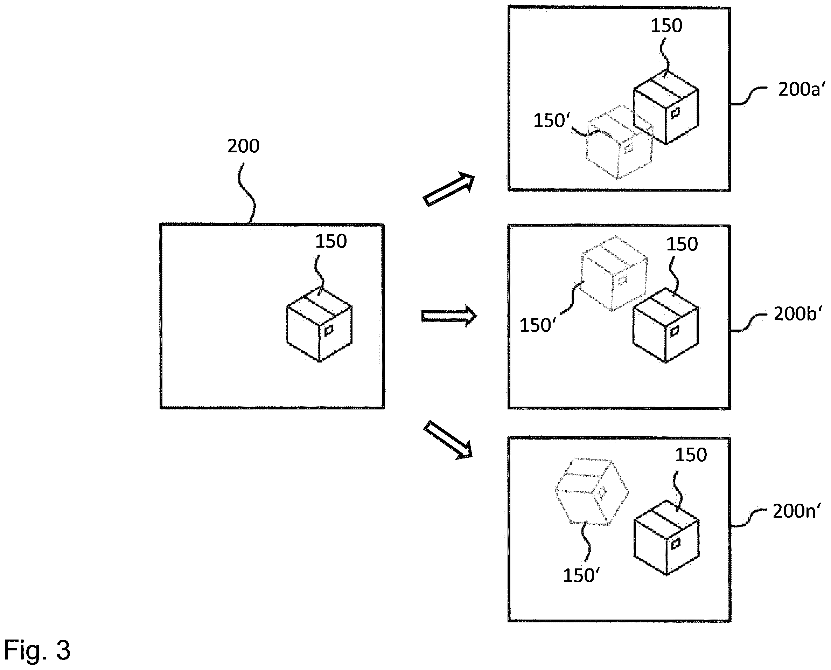

Figur 3 zeigt die Erstellung einer Vielzahl von simulierten Bildern 200a'-n' zum Trainieren des neuronalen Netzes 125 der Vorrichtung 110 zum Bestimmen der Pose eines Ladungsträgers 150 auf der Grundlage eines Bildes 200 des Ladungsträgers 150. Wie in Figur 3 beispielhaft dargestellt, kann der Prozessor 120 der Vorrichtung 110 ausgebildet sein, die Vielzahl von simulierten Bildern 200a'-n' des Ladungsträgers 150 zu erzeugen, indem in einem jeweiligen Bild 200 des Ladungsträgers 150 die Position und/oder die Orientierung des Ladungsträgers 150 zufällig geändert wird. In einer Ausführungsform kann der Prozessor 120 ausgebildet sein, in dem jeweiligen Bild 200 des Ladungsträgers 150 die Position und/oder die Orientierung des Ladungsträgers 150 auf der Grundlage einer Normalverteilung zufällig zu ändern.

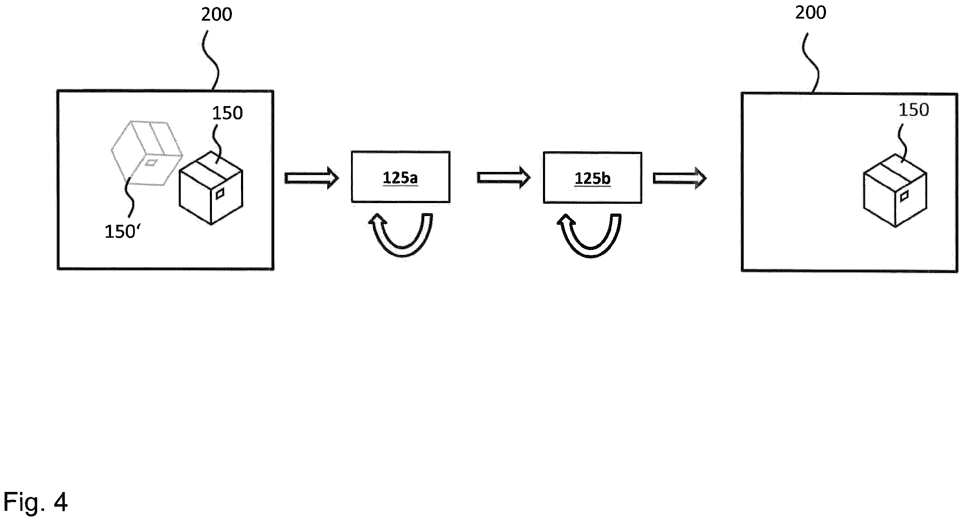

Figur 4 zeigt eine schematische Darstellung, welche die Vorrichtung 110 zum Bestimmen der Pose des Ladungsträgers 150 gemäß einer Ausführungsform illustriert. In der in Figur 4 gezeigten Ausführungsform umfasst das neuronale Netz 125 ein erstes neuronales Subnetzwerk (auch als "Initial Refiner" bezeichnet) 125a und ein zweites neuronales Subnetzwerk 125b (auch als "Final Refiner" bezeichnet). Dabei ist das erste neuronale Subnetzwerk 125a ausgebildet, auf der Grundlage des Bildes 200 des Ladungsträgers 150 und der ersten Abschätzung der Position des Ladungsträgers 150 (d.h. des CAD-Modells 150' des Ladungsträgers 150) eine Grobposition und eine Groborientierung des Ladungsträgers 150 (d.h. eine Position und einer Orientierung des Ladungsträgers 150 mit einer groben Auflösung) zu bestimmen. Das zweite neuronale Subnetzwerk 125b ist ausgebildet, auf der Grundlage des Bildes 200 des Ladungsträgers 150 und der Grobposition und der Groborientierung des Ladungsträgers 150 die Position und Orientierung des Ladungsträgers 150 mit einer feineren Auflösung zu bestimmen. Dabei können, wie in Figur 4 dargestellt, sowohl das erste neuronale Subnetzwerk 125a als auch das zweite neuronale Subnetzwerk 125a eine oder mehrere Iterationen durchlaufen, um eine gewünschte grobe Auflösung bzw. feine Auflösung mit einer gewünschten Genauigkeit zu erreichen.

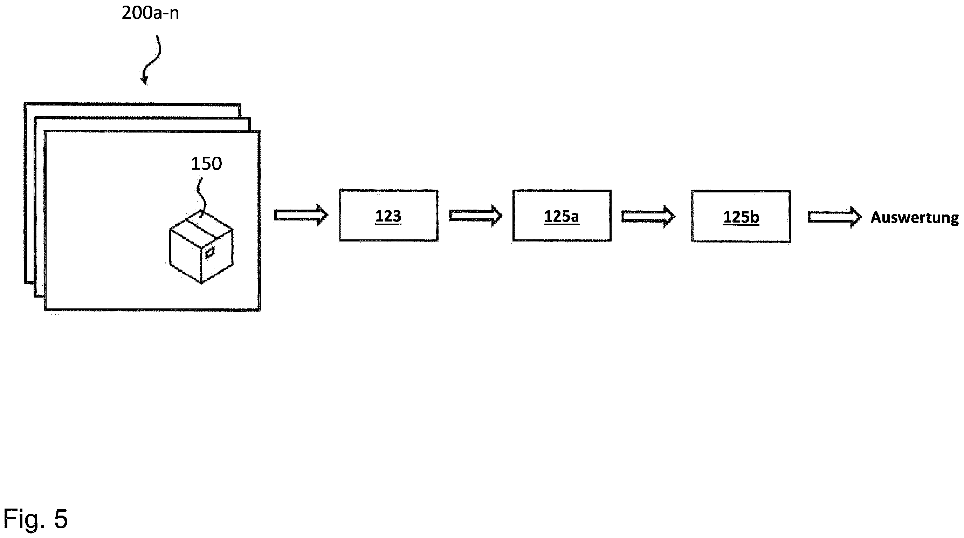

Das Aufteilen des Zustandsraums durch die Ausbildung mit einem ersten und zweiten neuronalen Subnetzwerk 125a,b erleichtert das Trainieren des neuronalen Netzes 125, wie dies in Figur 5 dargestellt ist. Bei der in Figur 5 dargestellten Ausführungsform ist der Prozessor 120 der Vorrichtung 110 ferner ausgebildet, ein weiteres künstliches neuronales Netz 123 zu implementieren, wobei das weitere neuronale Netz 123 ausgebildet ist, auf der Grundlage des Bildes 200 des Ladungsträgers 150 die erste Abschätzung der Position und der Orientierung des Ladungsträgers 150 zu bestimmen. Wie bereits vorstehend beschrieben, umfasst in einer Ausführungsform die Abschätzung der Position und der Orientierung des Ladungsträgers 150 ein Bild eines CAD-Modells 150' des Ladungsträgers 150.

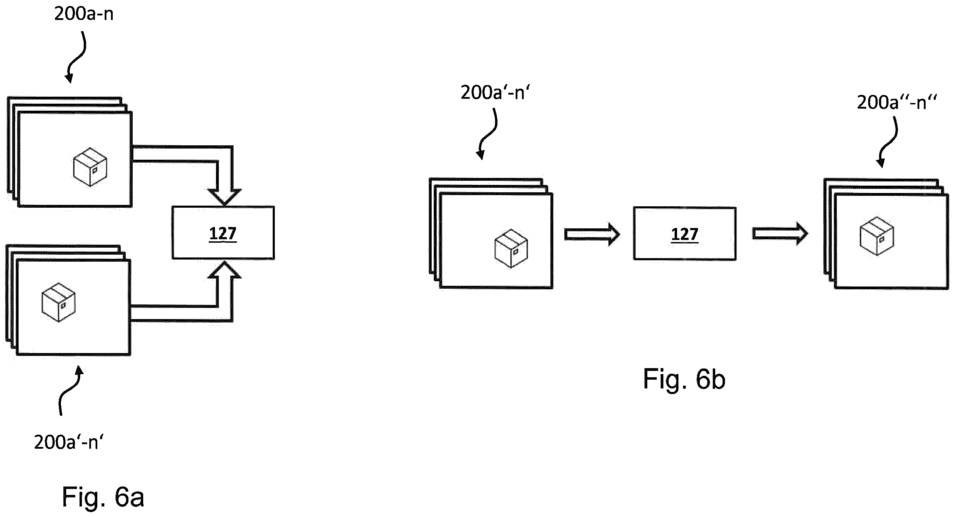

Figur 6a zeigt eine schematische Darstellung, welche das Trainieren eines weiteren neuronalen Netzes 127 zur Erstellung einer Vielzahl von Domain-adaptierten synthetischen Bildern 200a"-n" zum Trainieren des neuronalen Netzes 125 zum Bestimmen der Pose eines Ladungsträgers 150 gemäß einer Ausführungsform illustriert. Wie in Figur 6a dargestellt, können gemäß einer Ausführungsform zum Trainieren des weiteren neuronalen Netzes 127 simulierte Bilder 200a'-n' und reale Bilder 200a-n eines Ladungsträgers 150 verwendet werden. Figur 6b zeigt eine schematische Darstellung, welche die Anwendung des trainierten weiteren neuronalen Netzes 127 von Figur 6a darstellt, d.h. die Erstellung einer Vielzahl von Domain-adaptierten synthetischen Bildern 200a"-n" auf der Grundlage einer Vielzahl von simulierten, d.h. synthetischen Eingabebildern 200a'-n' mittels des weiteren neuronalen Netzes 127. In einer Ausführugsform kann es sich bei dem weiteren neuronalen Netz 127 um ein CUT-GAN (Contrastive Unpaired Image-to-Image Translation Generative Adversarial Network) handeln. Weitere Details zu einem CUT-GAN werden beispielsweise in dem Artikel T. Park et al., "Contrastive learning for unpaired image-to-image translation", European Conference on Computer Vision, 2020, beschrieben, auf den hiermit vollumfänglich Bezug genommen wird. Gemäß einer Ausführungsform ist der Prozessor 120 ausgebildet, das neuronale Netz 125 mit einer Vielzahl von simulierten Bildern 200a'-n' und/oder Domain-adaptierten simulierten Bildern 200a"-n" eines Ladungsträgers 150 zu trainieren.

Wie bereits vorstehend beschrieben, ist eine bevorzugte Ausführungsform der Architektur des neuronalen Netzes 125 in Figur 7 dargestellt. Die in Figur 7 dargestellte Architektur basiert auf dem Artikel Y. Labbe et al., "Cosypose: Consistent mutli-view multi-object 6d pose estimation", European Conference on Computer Vision, Seiten 574-591, Springer, August 2020, auf den hiermit vollumfänglich Bezug genommen wird. Wie bereits vorstehend beschrieben, umfassen die Eingabedaten 701 des neuronalen Netzes 125 das Bild 200 des Ladungsträgers 150 (bei dem es sich um ein RGB-Bild 200 des Ladungsträgers 150 mit drei Farbkanälen handeln kann) mit dem Begrenzungsrahmen 205 sowie die Abschätzung der Position und der Orientierung des Ladungsträgers 150, d.h. das Bild des CAD-Modells 150' des Ladungsträgers 150. Diese Eingabedaten 701 werden zunächst von einer Filtereinheit 702 verarbeitet, welche ausgebildet ist, bei dem Bild 200 des Ladungsträgers 150 und/oder dem Bild des CAD-Modells 150' des Ladungsträgers 150 Umgebungspixel herauszufiltern.

Wie in Figur 7 dargstellt, umfasst das neuronale Netz 125 ferner ein Feature-Extraction-Layer 703, welches ausgebildet ist, auf der Grundlage des Bildes 200 des Ladungsträgers 150 und der Abschätzung der Position und der Orientierung des Ladungsträgers 150 eine Feature-Map 704 zu erstellen. Das neuronale Netz 125 kann ferner ein Global-Average-Pooling-Layer 705 umfassen, welches ausgebildet ist, die Feature-Map 704 zu reduzieren, indem auf bekannte Art und Weise Mittelwerte gebildet werden. Schließlich kann das neuronale Netz 125 ferner ein erstes Fully-Connected-Layer 706a und ein zweites Fully-Connected-Layer 706b umfassen, wobei das erste Fully-Connected-Layer 706a ausgebildet ist, auf der Grundlage der reduzierten Feature-Map 704 die Position des Ladungsträgers 150 zu bestimmen, und wobei das zweite Fully-Connected-Layer 706b ausgebildet ist, auf der Grundlage der reduzierten Feature-Map 704 die Orientierung des Ladungsträgers 150 zu bestimmen.

In einer Ausführungsform kann es sich bei dem ersten Fully-Connected-Layer 706a um die bekannte FC3-Layer und bei dem zweiten Fully-Connected-Layer 706b um die bekannte FC6-Layer handeln.

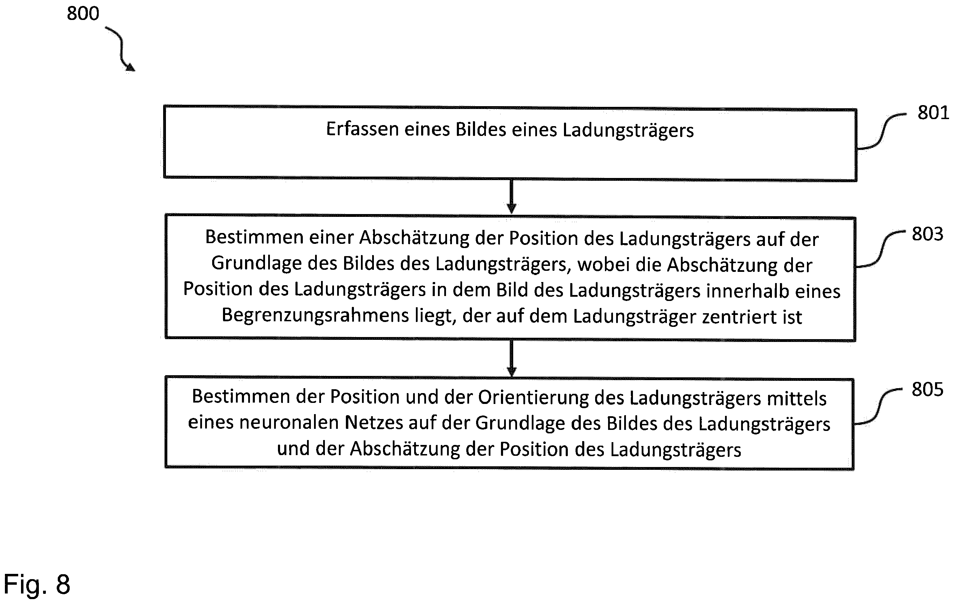

Figur 8 ein Flussdiagramm, welches Schritte eines Verfahrens 800 zum Bestimmen einer Pose eines Ladungsträgers 150 gemäß einer Ausführungsform illustriert. Das Verfahren 800 umfasst einen Schritt 801 zum Erfassen eines Bildes 200 des Ladungsträgers 150. Ferner umfasst das Verfahren 800 einen Schritt 803 zum Bestimmen einer Abschätzung der Position des Ladungsträgers 150 auf der Grundlage des Bildes 200 des Ladungsträgers 150, wobei die Abschätzung der Position des Ladungsträgers 150 in dem Bild 200 des Ladungsträgers 150 zumindest teilweise innerhalb eines Begrenzungsrahmens 205 liegt, der auf dem Ladungsträger 150 zentriert ist. Das Verfahren 800 umfasst ferner einen Schritt 805 zum Bestimmen der Position und der Orientierung des Ladungsträgers 150 mittels eines neuronalen Netzes 125 auf der Grundlage des Bildes 200 des Ladungsträgers 150 und der Abschätzung der Position des Ladungsträgers 150.

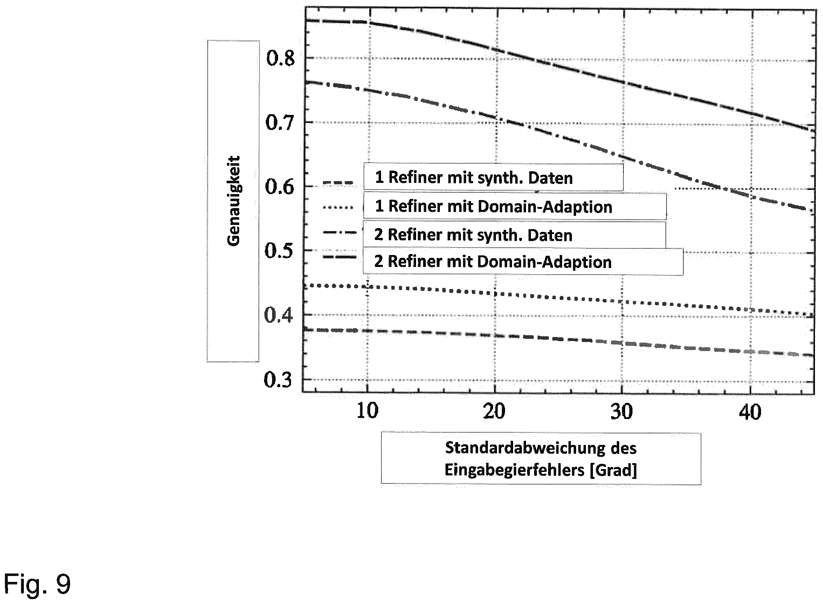

Figur zeigt 9 mehrere Graphen, welche die Genauigkeit der Bestimmung der Pose eines Ladungsträgers 150 mittels der Vorrichtung gemäß vier unterschiedlicher Ausführungsformen illustriert. In der Figur 9 zeigt die x-Achse ein Maß für die Rauschen-Standardabweichung und die y-Achse ein Genuaigkeitsmaß, nämlich das "ADD-S AUC"-Maß. Wie sich dies der Legende von Figur 9 entnehmen lässt, entsprechen die Graphen von unten nach oben den folgenden Ausführungsformen: ein bekanntes neuronales Netzwerk ("Refiner") gemäß dem bereits vorstehend zitierten Artikel Y. Labbe et al., "Cosypose: Consistent mutli-view multi-object 6d pose estimation" mit synthethischen, d.h. simulierten Bildern; das aus dem Artikel Y. Labbe et al., "Cosypose: Consistent mutli-view multi-object 6d pose estimation" bekannte neuronale Netzwerk mit Domain-adaptierten Bildern; zwei erfindungsgemäße neuronale Subnetzwerke ("Refiner") 125a,b mit synthethischen, d.h. simulierten Bildern 200a-n; sowie zwei erfindungsgemäße neuronale Subnetzwerke ("Refiner") 125a,b mit Domain-adaptierten Bildern 200a-n. Wie sich der Figur 9 entnehmen lässt, führt die erfindungsgemäße Aufteilung auf zwei neuronale Subnetzwerke ("Refiner") 125a,b und die Verwendung der Domain-adaptierten Bilder 200a-n zu der besten Genauigkeit.

## Patentansprüche

1. Vorrichtung (110) zum Bestimmen einer Position und einer Orientierung eines Ladungsträgers (150), wobei die Vorrichtung (110) umfasst:
eine Bilderfassungseinrichtung (130) zum Erfassen eines Bildes (200) des Ladungsträgers (150); und
einen Prozessor (120), welcher ausgebildet ist:
auf der Grundlage des Bildes (200) des Ladungsträgers (150) eine Abschätzung der Position des Ladungsträgers (150) zu bestimmen, wobei die Abschätzung der Position des Ladungsträgers (150) in dem Bild (200) des Ladungsträgers (150) zumindest teilweise innerhalb eines Begrenzungsrahmens (205) liegt, der auf dem Ladungsträger (150) zentriert ist; und
ein neuronales Netz (125) zu implementieren, wobei das neuronale Netz (125) ausgebildet ist, auf der Grundlage des Bildes (200) des Ladungsträgers (150) und der Abschätzung der Position des Ladungsträgers (150) die Position und Orientierung des Ladungsträgers (150) zu bestimmen.

2. Vorrichtung (110) nach Anspruch 1, wobei der Prozessor (120) ferner ausgebildet ist, ein weiteres neuronales Netz (123) zu implementieren, wobei das weitere neuronale Netz (123) ausgebildet ist, auf der Grundlage des Bildes (200) des Ladungsträgers (150) die Abschätzung der Position des Ladungsträgers (150) zu bestimmen.

3. Vorrichtung (110) nach Anspruch 1 oder 2, wobei die Abschätzung der Position und der Orientierung des Ladungsträgers (150) ein Bild eines CAD-Modells (150') des Ladungsträgers (150) ist.

4. Vorrichtung (110) nach einem der vorher gehenden Ansprüche, wobei das neuronale Netz (125) ein Feature-Extraction-Layer (703) umfasst, welches ausgebildet ist, auf der Grundlage des Bildes (200) des Ladungsträgers (150) und der Abschätzung der Position und der Orientierung des Ladungsträgers (150) eine Feature-Map (704) zu erstellen.

5. Vorrichtung (110) nach Anspruch 4, wobei das neuronale Netz (125) ferner ein Global-Average-Pooling-Layer (705) umfasst, welches ausgebildet ist, die Feature-Map (704) zu reduzieren.

6. Vorrichtung (110) nach Anspruch 5, wobei das neuronale Netz (125) ferner ein erstes Fully-Connected-Layer (706a) und ein zweites Fully-Connected-Layer (706b) umfasst, wobei das erste Fully-Connected-Layer (706a) ausgebildet ist, auf der Grundlage der reduzierten Feature-Map (704) die Position des Ladungsträgers (150) zu bestimmen, und wobei das zweite Fully-Connected-Layer (706b) ausgebildet ist, auf der Grundlage der reduzierten Feature-Map (704) die Orientierung des Ladungsträgers (150) zu bestimmen.

7. Vorrichtung (110) nach einem der vorher gehenden Ansprüche, wobei der Prozessor (120) ferner ausgebildet ist, das neuronale Netz (125) mit einer Vielzahl von simulierten Bildern (200a'-n') und/oder Domain-adaptierten simulierten Bildern (200a"-n") eines Ladungsträgers (150) zu trainieren.

8. Vorrichtung (110) nach Anspruch 7, wobei der Prozessor (120) ausgebildet ist, die Vielzahl von simulierten Bildern (200a'-n') und/oder Domain-adaptierten simulierten Bildern (200a"-n") des Ladungsträgers (150) zu erzeugen, indem in einem jeweiligen Bild (200) des Ladungsträgers (150) die Position und/oder die Orientierung des Ladungsträgers (150) zufällig geändert wird.

9. Vorrichtung (110) nach Anspruch 8, wobei der Prozessor (120) ausgebildet ist, in dem jeweiligen Bild (200) des Ladungsträgers (150) die Position und/oder die Orientierung des Ladungsträgers (150) auf der Grundlage einer Normalverteilung zufällig zu ändern.

10. Vorrichtung (110) nach einem der vorher gehenden Ansprüche, wobei das neuronale Netz (125) ein erstes neuronales Subnetzwerk (125a) und ein zweites neuronales Subnetzwerk (125a) umfasst, wobei das erste neuronale Subnetzwerk (125a) ausgebildet ist, auf der Grundlage des Bildes (200) des Ladungsträgers (150) und der Abschätzung der Position des Ladungsträgers (150) eine Grobposition und eine Groborientierung des Ladungsträgers (150) zu bestimmen, und wobei das zweite neuronale Subnetzwerk (125b) ausgebildet ist, auf der Grundlage des Bildes (200) des Ladungsträgers (150) und der Grobposition und der Groborientierung des Ladungsträgers (150) die Position und Orientierung des Ladungsträgers (150) zu bestimmen.

11. Flurförderzeug (100) oder Industrieroboter (100) zum Befördern eines Ladungsträgers (150), wobei das Flurförderzeug (100) oder der Industrieroboter (100) eine Vorrichtung (110) nach einem der vorher gehenden Ansprüche umfasst.

12. Verfahren (800) zum Bestimmen einer Position und einer Orientierung eines Ladungsträgers (150), wobei das Verfahren (800) umfasst:
Erfassen (801) eines Bildes (200) des Ladungsträgers (150);
Bestimmen (803) einer Abschätzung der Position des Ladungsträgers (150) auf der Grundlage des Bildes (200) des Ladungsträgers (150), wobei die Abschätzung der Position des Ladungsträgers (150) in dem Bild (200) des Ladungsträgers (150) zumindest teilweise innerhalb eines Begrenzungsrahmens (205) liegt, der auf dem Ladungsträger (150) zentriert ist; und
Bestimmen (805) der Position und der Orientierung des Ladungsträgers (150) mittels eines neuronalen Netzes (125) auf der Grundlage des Bildes (200) des Ladungsträgers (150) und der Abschätzung der Position des Ladungsträgers (150).
